# FASCICULE DE BREVET EUROPEEN

(11) **EP 1 065 480 B1**
(45) Date de publication et mention de la délivrance du brevet: **14.12.2005**
(21) Numéro de dépôt: 00112864.4
(22) Date de dépôt: 19.06.2000
(51) Int. Cl.: G01G 23/08, F16F 9/48

(54) **Amortisseur pour dispositif de pesage et dispositif de pesage muni d'un amortisseur**
Schwingungsdämpfer für eine Waage und schwingungsgedämpfte Waage
Vibration damper for a weighing device and vibration damped weighing device

(30) Priorité: 02.07.1999 CH 122199
(43) Date de publication de la demande: 03.01.2001
(73) Titulaire: S.C.A.I.M.E. S.A., 74105 Annemasse (FR)
(72) Inventeur: Aumard, Jean-Pierre, 74100 Etrembieres (FR); Navarro, Jean-Claude, 74100 Ville-La-Grand (FR)
(74) Mandataire: KIRKER & Cie S.A.

(56) Documents cités:
- EP-A- 0 309 144
- FR-A- 1 569 246
- US-A- 3 763 971

## Description

Dans des applications requérant la pesée de nombreux articles il est important de réduire le temps de mesure de chaque article. Pour ce faire des dispositifs de pesage ont été équipés d'amortisseurs permettant, lors d'une mesure, de réduire le temps nécessaire pour obtenir l'équilibre après qu'une charge ait été posée sur le dispositif de pesée.

La présente invention a pour objet un tel amortisseur ainsi qu'un dispositif de pesage équipé d'un amortisseur.

On connaît différents types d'amortisseurs pour dispositifs de pesage tels, par exemple, que ceux décrits dans les documents EP 0309144, US 5232062 et US 3763971.

Un premier type d'amortisseur pour dispositif de pesage est décrit en référence à la figure 10 du document EP 0309144, il est formé par un réservoir ouvert vers le haut rempli de liquide dans lequel plonge un piston solidaire du corps de mesure. Lorsque le piston oscille, ses déplacements sont amortis par le passage du liquide dans l'étranglement annulaire entre le piston et le réservoir.

De tels amortisseurs présentent l'inconvénient que le réservoir de liquide est ouvert, aussi pour le transport du dispositif de pesage il faut vider le liquide ou obturer de façon étanche le réservoir. Du fait que le réservoir est ouvert de la poussière ou d'autres éléments peuvent y pénétrer et altérer les caractéristiques, notamment de viscosité, du liquide.

Par ailleurs, suivant le poids de l'objet à mesurer la tige du piston plonge plus ou moins profondément dans le liquide, ce qui modifie la force ascensionnelle appliquée au piston et nuit donc à la précision de la mesure. Il en va de même avec les forces dues à la tension superficielle du liquide le faisant remonter sur les parois du réservoir et le long de la tige du piston.

Ce même document EP 0309144 décrit un second type d'amortisseur comprenant deux chambres étanches remplies de liquide reliées par un étranglement. Lors des oscillations du barreau de mesure, le liquide passe alternativement d'une chambre dans l'autre par l'étranglement amortissant ainsi les oscillations de l'élément de mesure.

De tels amortisseurs sont complexes et encombrants du fait des deux chambres étanches. Par ailleurs, ces chambres étant totalement remplies de liquide la précision de mesure est affectée par les changements de pression barométrique.

De plus, les deux types d'amortisseurs précités ont une force d'amortissement constante quelle que soit l'amplitude des oscillations de l'élément de mesure.

Un troisième type d'amortisseur pour dispositif de pesage est connu du document US 5232062, dont le fonctionnement est basé sur la dynamique de films liquides de faible épaisseur. Le réservoir contenant le liquide est ici également ouvert et le piston qui y est immergé a une surface inférieure plane et parallèle au fond du réservoir. De plus, le jeu annulaire entre le réservoir et le piston est grand et ne limite pratiquement pas l'écoulement du liquide lors des oscillations de l'élément de mesure solidaire du piston.

Dans ce type d'amortisseur la force d'amortissement est très élevée, elle est proportionnelle au carré de la surface du piston et est inversement proportionnelle à la distance séparant le piston du fond du récipient.

Dans ce type d'amortisseur la force est si grande que le mouvement est amorti en une ou deux oscillations seulement. Par contre, du fait des propriétés des films minces une force résiduelle reste appliquée au piston, ce qui nuit à la précision de mesure. De plus, de tels amortisseurs ne peuvent être utilisés que dans des dispositifs de pesage dont l'amplitude d'oscillation de l'élément de mesure est très faible du fait de la faible distance séparant le piston du fond du récipient.

La présente invention a pour objet un amortisseur pour dispositif de pesage qui obvie aux inconvénients précités des dispositifs existants. Cette invention a en outre pour but la réalisation d'un amortisseur pour dispositif de pesage qui soit facilement transportable, peu encombrant, dont la force d'amortissement ne soit pas régie par la physique des films minces de liquide, qui n'entraîne pas d'altération de la précision de mesure et dont un composant de la force d'amortissement soit fonction du poids à mesurer de manière à optimaliser le temps d'amortissement quel que soit le poids mesuré.

L'invention a pour objet un amortisseur pour dispositif de pesage comportant une cavité dans laquelle peut se déplacer une palette destinée à être reliée à l'organe de mesure de la pesée, caractérisé par le fait que la cavité est obturée de façon étanche par une membrane souple; que cette cavité est partiellement remplie d'huile laissant un volume d'air ou de gaz entre le niveau d'huile et la membrane, la palette étant entièrement immergée dans l'huile; que la surface inférieure de la palette et le fond de la cavité présentent des formes non planes et non parallèles entre elles empêchant ainsi la formation d'un film mince d'huile entre elles; que la surface périphérique de la palette et la paroi périphérique de la cavité définissent entre elles un premier étranglement dont la section est constante quelle que soit la position de la palette dans la cavité; et par le fait que la zone périphérique du fond de la cavité et la zone périphérique de la surface inférieure de la palette, en regard du fond de la cavité, définissent ensemble un second étranglement dont la section varie en fonction de la position de la palette dans la cavité.

La surface inférieure de la palette peut présenter une forme concave courbe munie d'un rebord périphérique.

Le fond de la cavité peut présenter une zone annulaire plane, une zone annulaire médiane surélevée et une zone centrale concave. La face supérieure de la cavité 4 peut être obturée par un couvercle présentant un passage central donnant accès à un élément de liaison reliant la palette à l'extrémité libre du barreau déformable et la périphérie de la membrane souple peut être serrée entre le couvercle et le bord supérieur de la cavité, la zone centrale de cette membrane étant serrée entre la palette et l'élément de liaison.

L'invention concerne également un dispositif de pesage comportant un bâti, un capteur de mesure formé d'un barreau déformable monolithique dont l'une des extrémités est fixée sur le bâti tandis que l'autre, recevant le poids à mesurer, est solidaire de la palette d'un amortisseur hydraulique se déplaçant dans une cavité, caractérisé par le fait que cette cavité est logée dans le bâti et qu'elle est obturée de façon étanche par une membrane souple; que cette cavité est partiellement remplie d'huile laissant un volume d'air ou de gaz entre le niveau d'huile et la membrane, la palette étant entièrement immergée dans l'huile; que la surface inférieure de la palette et le fond de la cavité présentent des formes non planes et non parallèles entre elles empêchant ainsi la formation d'un film mince d'huile entre elles; que la surface périphérique de la palette et la paroi périphérique de la cavité définissent entre elles un premier étranglement dont la section est constante quelle que soit la position de la palette dans la cavité; et par le fait que la zone périphérique du fond de la cavité et la zone périphérique de la surface inférieure de la palette, en regard du fond de la cavité, définissent ensemble un second étranglement dont la section varie en fonction de la position de la palette dans la cavité.

La face supérieure de la cavité peut être obturée par un couvercle présentant un passage central donnant accès à un élément de liaison reliant la palette à l'extrémité libre du barreau déformable et la périphérie de la membrane souple peut être serrée entre le couvercle et le bord supérieur de la cavité, la zone centrale de cette membrane étant serrée entre la palette et l'élément de liaison.

Le dessin annexé illustre schématiquement et à titre d'exemple une forme d'exécution du dispositif de pesage et de l'amortisseur selon l'invention.
La figure 1 est une vue d'ensemble du dispositif de pesage partiellement en coupe.

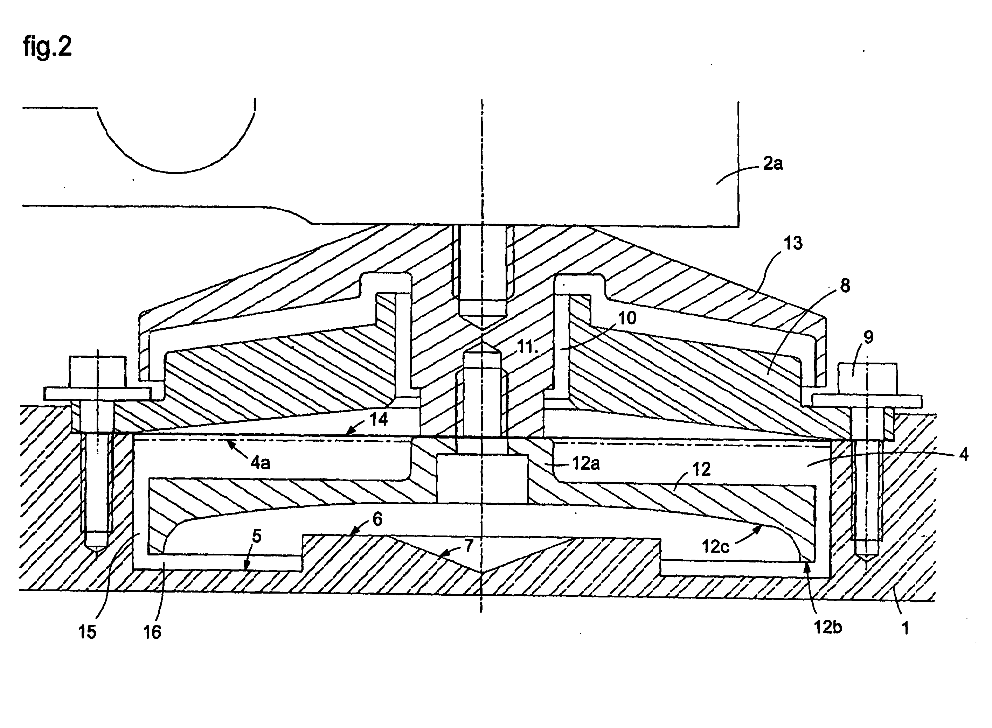

La figure 2 est une vue à plus grande échelle et en coupe de l'amortisseur pour dispositif de pesage.

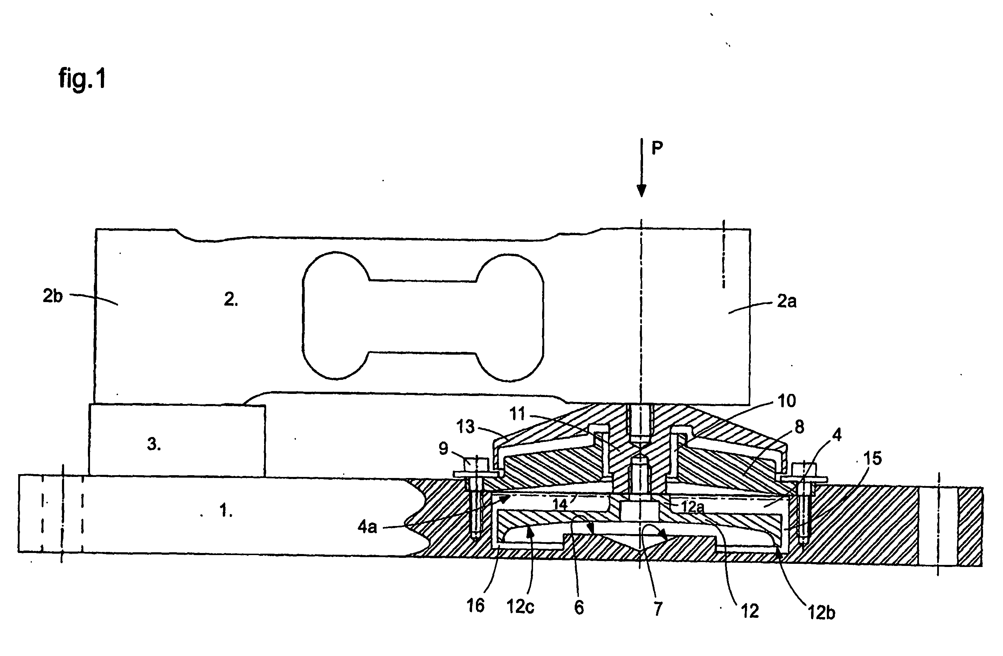

Le dispositif de pesage illustré à la figure 1 comporte une plaque de base 1 et un capteur de mesure 2 constitué par un barreau déformable monobloc.

Ce barreau déformable comporte de façon connue des jauges de contrainte au droit de ses charnières de déformation permettant de mesurer la déflexion du barreau en fonction d'un poids P qui est appliqué à son extrémité libre 2a. La mesure de cette déflexion est proportionnelle au poids P.

L'autre extrémité 2b du barreau 2 est fixée rigidement par l'intermédiaire d'une cale 3 sur la plaque de base 1.

Cette fixation peut être réalisée par des vis de serrage non illustrées.

La plaque de base 1 comporte sous l'extrémité libre 2a du barreau 2 une cavité 4, de préférence de forme circulaire, dont le fond comporte deux zones annulaires 5, 6 situées dans des plans différents, parallèles dans l'exemple illustré mais à des distances différentes de la face supérieure de la plaque de base 1. La partie centrale du fond de la cavité 4 présente une forme conique concave 7.

Cette cavité 4 comporte encore un épaulement supérieur servant d'appui à un couvercle 8 vissé sur la plaque de base par des vis 9.

Ce couvercle 8 comporte un trou central 10 donnant passage à l'arbre central 11 d'une pièce de liaison reliant la face inférieure de l'extrémité libre 2a du barreau à un piston 12 situé dans la cavité 4. La pièce de liaison comporte encore une jupe 13 évitant que de la poussière ou des particules ne pénètrent dans la partie supérieure de la cavité 4.

Une membrane souple et étanche 14 est serrée par sa périphérie entre le couvercle 8 et la plaque de base 1 et en son centre entre le piston 12 et l'arbre 11 de la pièce de liaison. Ainsi est formée une chambre étanche dans la cavité 4, chambre étanche qui est remplie de liquide, généralement d'huile. Le niveau 14a de remplissage de l'huile n'atteint pas la membrane, ainsi une poche d'air ou de gaz est ménagée dans la chambre étanche évitant que les caractéristiques de l'amortisseur soient dépendantes de la pression atmosphérique.

Le piston 12 comporte un petit moyeu 12a permettant sa fixation à la pièce de liaison 11 par exemple à l'aide d'une vis. Le piston comporte une palette entièrement immergée dans l'huile présentant la forme générale d'une cloche. La surface inférieure de cette palette comporte en effet une zone annulaire périphérique 12b plane et parallèle à la zone annulaire 5 du fond de la cavité 4.

Dans une variante cette zone annulaire périphérique 12a de la palette pourrait ne pas être plane. Elle pourrait être arrondie, rainurée, ou de toute autre forme. Le reste de la surface inférieure 12c de cette palette présente la forme d'une voûte dont le rayon de courbure est plus grand au centre que dans la zone périphérique.

La forme du fond de la cavité 4 et celle de la surface inférieure de la palette 12 sont telles qu'elles ne sont pas parallèles et qu'il ne puisse pas se former un film liquide entre elles, de manière à éviter ainsi tout effet nuisible, notamment le "collage" de la palette sur le fond de la cavité.

Cet amortisseur présente en outre la caractéristique d'avoir deux zones d'amortissement, ou d'étranglement du liquide, l'une 15 comprise entre la paroi latérale de la cavité 4 et la paroi périphérique de la palette et l'autre 16 située entre la partie annulaire périphérique 5 du fond de la cavité et la zone annulaire périphérique 12b de la surface inférieure de la palette 12.

La force d'amortissement due à l'étranglement périphérique 15 est constante quelle que soit l'amplitude du mouvement de la palette 12 à l'intérieur de la cavité 4.

Par contre, la force d'amortissement due à l'étranglement 16 entre le bord périphérique inférieur de la palette et le fond de la cavité croît en fonction de l'amplitude du mouvement de la palette en direction du fond de la cavité.

Ainsi plus le poids à peser est important, plus cette composante de la force d'amortissement augmente.

Grâce à cet effet non linéaire de la force d'amortissement en fonction du poids de l'objet à peser il est possible d'optimaliser le temps d'amortissement des oscillations du barreau déformable 2, quelle que soit la valeur de la charge, à l'intérieur bien sûr d'une plage dépendant des caractéristiques du barreau déformable.

Grâce à la forme du fond de la cavité 4 et de la face inférieure de la palette 12, on élimine tous les effets indésirables dûs à l'effet de film mince puisqu'un tel film ne peut pas se former entre ces éléments.

Dans l'exemple illustré, la cavité 4 de l'amortisseur est pratiquée dans la plaque de base 1 ou bâti mais dans d'autres variantes le boîtier de l'amortisseur pourrait être distinct de ce bâti.

Les caractéristiques principales de l'amortisseur selon l'invention sont :
1. Que la cavité de l'amortisseur est obturée de façon étanche, ce qui permet le transport et la manutention de l'amortisseur sans problèmes.
2. Que la cavité de l'amortisseur est obturée à l'aide d'une membrane souple et que l'huile ne remplit pas complètement cette cavité étanche, ce qui évite que des modifications de pression atmosphérique n'influencent les caractéristiques de fonctionnement de l'amortisseur.
3. Que la forme de la surface inférieure de la palette 12 et celle du fond de la cavité 4 soient telles qu'elles empêchent la formation de films minces d'huile entre ces deux éléments pour éviter à la fois une trop grande force d'amortissement et un "collage" de ces surfaces dûs aux caractéristiques physiques des films minces et qui empêchent le barreau de mesure de s'immobiliser dans sa position d'équilibre, ce qui nuit à la précision de la mesure.

En particulier on doit veiller à ce que ces surfaces du fond et de la palette ne soient pas parallèles et ménagent un volume d'huile entre elles qui présente une épaisseur variable.
4. Que l'amortisseur comporte un premier étranglement annulaire 15 entre la paroi périphérique de la palette 12 définissant une force d'amortissement constante.
5. Que l'amortisseur comporte un second étranglement 16 entre le fond de la cavité 4 et une zone annulaire 12b périphérique de la surface inférieure de la palette 12 définissant une force d'amortissement qui est fonction du poids de la charge pesée.

En effet, plus le poids de la charge est grand, plus l'amplitude du déplacement du barreau et donc l'amplitude du mouvement de la palette 12 en direction du fond de la cavité 4 est grande, de sorte que l'étranglement 16 diminue de section opposant ainsi une résistance accrue à l'écoulement de l'huile.

De cette façon, on obtient un amortissement optimal en fonction de la charge à peser réduisant de façon optimum le temps nécessaire pour atteindre l'équilibre et donc faire la mesure.

Il est évident que dans des variantes la forme du fond de la cavité 4 et celle de la face inférieure, en regard de ce fond 4, de la palette 12 peuvent être différentes de celles illustrées au dessin. Il faut toutefois s'assurer que par leurs formes ces surfaces définissent un étranglement dont la section varie avec la distance séparant la palette du fond et que la formation d'un film mince d'huile soit impossible entre ces deux surfaces.

Pour ce faire il suffit généralement que ces surfaces ne soient pas planes et qu'elles ne soient pas parallèles entre elles, définissant ainsi un volume d'huile entre elles d'épaisseur variable, non constante.

## Revendications

1. Amortisseur pour dispositif de pesage comportant une cavité (4) dans laquelle peut se déplacer une palette (12) destinée à être reliée à l'organe de mesure (2) de la pesée, **caractérisé par le fait que** la cavité (4) est obturée de façon étanche par une membrane souple (14); que cette cavité (4) est partiellement remplie d'huile laissant un volume d'air ou de gaz entre le niveau d'huile (14a) et la membrane (14), la palette (12) étant entièrement immergée dans l'huile; que la surface inférieure de la palette (12) et le fond de la cavité (4) présentent des formes non planes et non parallèles entre elles empêchant ainsi la formation d'un film mince d'huile entre elles; que la surface périphérique de la palette (12) et la paroi périphérique de la cavité (4) définissent entre elles un premier étranglement (15) dont la section est constante quelle que soit la position de la palette (12) dans la cavité (4); et **par le fait que** la zone périphérique (5) du fond de la cavité (4) et la zone périphérique (12b) de la surface inférieure de la palette (12), en regard du fond de la cavité (4), définissent ensemble un second étranglement (16) dont la section varie en fonction de la position de la palette (12) dans la cavité (4).

2. Amortisseur selon la revendication 1, **caractérisé par le fait que** la surface inférieure de la palette présente une forme concave courbe (12c) munie d'un rebord périphérique (12b).

3. Amortisseur selon la revendication 1 ou la revendication 2, **caractérisé par le fait que** le fond de la cavité présente une zone annulaire plane (5), une zone annulaire médiane surélevée (6) et une zone centrale concave (8).

4. Amortisseur selon l'une des revendications précédentes, **caractérisé par le fait que** la face supérieure de la cavité (4) est obturée par un couvercle (8) présentant un passage central (10) donnant accès à un élément de liaison (11) reliant la palette (12) à l'extrémité libre (2a) du barreau déformable (2) et **par le fait que** la périphérie de la membrane souple (14) est serrée entre le couvercle (8) et le bord supérieur de la cavité (4), la zone centrale de cette membrane (14) étant serrée entre la palette (12) et l'élément de liaison (11).

5. Dispositif de pesage comportant un bâti, un capteur de mesure formé d'un barreau déformable monolithique (2) dont l'une des extrémités (2b) est fixée sur le bâti (1) tandis que l'autre (2a), recevant le poids (P) à mesurer, est solidaire de la palette (12) d'un amortisseur hydraulique se déplaçant dans une cavité (4), **caractérisé par le fait que** cette cavité (4) est logée dans le bâti (1) et qu'elle est obturée de façon étanche par une membrane souple (14); que cette cavité (4) est partiellement remplie d'huile laissant un volume d'air ou de gaz entre le niveau d'huile (14a) et la membrane (14), la palette (12) étant entièrement immergée dans l'huile; que la surface inférieure (12b, 12c) de la palette (12) et le fond (5, 6, 7) de la cavité (4) présentent des formes non planes et non parallèles entre elles empêchant ainsi la formation d'un film mince d'huile entre elles; que la surface périphérique de la palette (12) et la paroi périphérique de la cavité (4) définissent entre elles un premier étranglement (15) dont la section est constante quelle que soit la position de la palette (12) dans la cavité (4); et **par le fait que** la zone périphérique (5) du fond de la cavité (4) et la zone périphérique (12b) de la surface inférieure de la palette (12), en regard du fond de la cavité (4), définissent ensemble un second étranglement (16) dont la section varie en fonction de la position de la palette (12) dans la cavité (4).

6. Dispositif de pesage selon la revendication 5, **caractérisé par le fait que** la face supérieure de la cavité (4) est obturée par un couvercle (8) présentant un passage central (10) donnant accès à un élément de liaison (11) reliant la palette (12) à l'extrémité libre (2a) du barreau déformable (2) et **par le fait que** la périphérie de la membrane souple (14) est serrée entre le couvercle (8) et le bord supérieur de la cavité (4), la zone centrale de cette membrane (14) étant serrée entre la palette (12) et l'élément de liaison (11).

## Patentansprüche

1. Schwingungsdämpfer für eine Waage mit einem Hohlraum (4), in dem sich eine Schaufel (12), die dafür bestimmt ist, mit dem Messorgan (2) für das Wägegut verbunden zu werden, bewegen kann, **dadurch gekennzeichnet, dass** der Hohlraum (4) durch eine biegsame Membran (14) dicht verschlossen ist; dass dieser Hohlraum (4) teilweise mit Öl gefüllt ist, das einen Luft- oder Gasraum zwischen dem Ölspiegel (14a) und der Membran (14) frei lässt, wobei die Schaufel (12) ganz in das Öl eintaucht; dass die Unterseite der Schaufel (12) und der Boden des Hohlraums (4) in ihrer Gestalt uneben und nicht parallel zueinander sind, um so die Bildung einer dünnen Ölschicht zwischen ihnen zu verhindern; dass die Aussenseite der Schaufel (12) und die Aussenwand des Hohlraums (4) zwischen sich eine erste Verengung (15) definieren, deren Querschnitt bei allen Positionen der Schaufel (12) im Hohlraum (4) konstant ist; und **dadurch**, dass der periphere Bereich (5) des Bodens des Hohlraums (4) und der periphere Bereich (12b) der Unterseite der Schaufel (12), die dem Boden des Hohlraums (4) zugewandt ist, zusammen eine zweite Verengung (16) definieren, deren Querschnitt sich in Abhängigkeit von der Position der Schaufel (12) im Hohlraum (4) ändert.

2. Schwingungsdämpfer nach Anspruch 1, **dadurch gekennzeichnet, dass** die Unterseite der Schaufel eine konkav gekrümmte Gestalt (12c) aufweist und mit einer peripheren Randleiste (12b) versehen ist.

3. Schwingungsdämpfer nach Anspruch 1 oder Anspruch 2, **dadurch gekennzeichnet, dass** der Boden des Hohlraums einen ebenen ringförmigen Bereich (5), einen erhöhten mittleren ringförmigen Bereich (6) und einen zentralen konkaven Bereich (8) aufweist.

4. Schwingungsdämpfer nach einem der vorangehenden Ansprüche, **dadurch gekennzeichnet, dass** die Oberseite des Hohlraums (4) durch einen Deckel (8) verschlossen ist, der einen zentralen Durchgang (10) aufweist, der zu einem Verbindungselement (11) führt, das die Schaufel (12) mit dem freien Ende (2a) des verformbaren Balkens (2) verbindet, und **dadurch**, dass die Peripherie der biegsamen Membran (14) zwischen dem Deckel (8) und der Oberkante des Hohlraums (4) eingespannt ist, wobei der zentrale Bereich dieser Membran (14) zwischen der Schaufel (12) und dem Verbindungselement (11) eingespannt ist.

5. Waage mit einem Rahmen, einem aus einem monolithischen verformbaren Balken (2) gebildeten Messfühler, dessen eines Ende (2b) am Rahmen (1) befestigt ist, während das andere (2a), das das zu messende Gewicht (P) aufnimmt, fest mit der Schaufel (12) eines hydraulischen Schwingungsdämpfers verbunden ist, der sich in einem Hohlraum (4) bewegt, **dadurch gekennzeichnet, dass** dieser Hohlraum (4) im Rahmen (1) untergebracht ist und dass er durch eine biegsame Membran (14) dicht verschlossen ist; dass dieser Hohlraum (4) teilweise mit Öl gefüllt ist, das einen Luft- oder Gasraum zwischen dem Ölspiegel (14a) und der Membran (14) frei lässt, wobei die Schaufel (12) ganz in das Öl eintaucht; dass die Unterseite (12b, 12c) der Schaufel (12) und der Boden (5, 6, 7) des Hohlraums (4) in ihrer Gestalt uneben und nicht parallel zueinander sind, um so die Bildung einer dünnen Ölschicht zwischen ihnen zu verhindern; dass die Aussenseite der Schaufel (12) und die Aussenwand des Hohlraums (4) zwischen sich eine erste Verengung (15) defnieren, deren Querschnitt bei allen Positionen der Schaufel (12) im Hohlraum (4) konstant ist; und ***dadurch**, dass der periphere Bereich (5) des Bodens des Hohlraums (4) und der periphere Bereich (12b) der Unterseite der Schaufel (12), die dem Boden des Hohlraums (4) zugewandt ist, zusammen eine zweite Verengung (16) definieren, deren Querschnitt sich in Abhängigkeit von der Position der Schaufel (12) im Hohlraum (4) ändert.

6. Waage nach Anspruch 5, **dadurch gekennzeichnet, dass** die Oberseite des Hohlraums (4) durch einen Deckel (8) verschlossen ist, der einen zentralen Durchgang (10) aufweist, der zu einem Verbindungselement (11) führt, das die Schaufel (12) mit dem freien Ende (2a) des verformbaren Balkens (2) verbindet, und **dadurch**, dass die Peripherie der biegsamen Membran (14) zwischen dem Deckel (8) und der Oberkante des Hohlraums (4) eingespannt ist, wobei der zentrale Bereich dieser Membran (14) zwischen der Schaufel (12) und dem Verbindungselement (11) eingespannt ist.

## Claims

1. Vibration damper for weighing device with a hollow space (4) within which a blade (12) that is intended to be attached to the measuring element (2) for the weighed goods is able to move, **characterised in that** the hollow space (4) is tightly closed off by a flexible membrane (14); **in that** this hollow space (4) is partially filled with oil leaving a volume of air or gas between the oil level (14a) and the membrane (14) while blade (12) is fully immersed into the oil; **in that** the bottom face of blade (12) and the bottom of the hollow space (4) have shapes that are not planar and not parallel to each other so as to prevent formation of a thin oil film between them; **in that** the peripheral surface of blade (12) and the peripheral wall of the hollow space (4) define a first constriction (15) between them having a constant cross section whatever the position of blade (12) within the hollow space (4); and **in that** the peripheral region (5) of the bottom of hollow space (4) and the peripheral region (12b) of the bottom face of blade (12) that faces the bottom of hollow space (4) together define a second constriction (16) the cross section of which varies as a function of position of blade (12) within the hollow space (4).

2. Vibration damper according to claim 1, **characterised in that** the bottom face of the blade has a curved concave shape (12c) and is provided with a peripheral raised edge (12b).

3. Vibration damper according to claim 1 or claim 2, **characterised in that** the bottom of the hollow space has an annular planar region (5), an annular intermediate raised region (6), and a central concave region (8).

4. Vibration damper according to one of the preceding claims, **characterised in that** the top face of hollow space (4) is closed off by a lid (8) having a central passage (10) providing access to a connecting element (11) linking blade (12) to the free end (2a) of the deformable beam (2), and **in that** the periphery of the flexible membrane (14) is clamped between the lid (8) and the upper edge of the hollow space (4), the central region of this membrane (14) being clamped between blade (12) and the connecting element (11).

5. Weighing device with a frame, a measuring pick-up formed by a monolithic deformable beam (2) one of the ends (2b) of which is fastened to the frame (1) while the other end (2a) that receives the weight (P) to be measured is integral with blade (12) of a hydraulic vibration damper that is moving within a hollow space (4), **characterised in that** this hollow space (4) is housed within frame (1) and that it is tightly closed off by a flexible membrane (14); **in that** this hollow space (4) is partially filled with oil leaving a volume of air or gas between the oil level (14a) and the membrane (14), while blade (12) is fully immersed into the oil; **in that** the bottom face (12b, 12c) of blade (12) and the bottom (5, 6, 7) of the hollow space (4) have shapes that are not planar and not parallel to each other so as to prevent formation of a thin oil film between them; **in that** the peripheral surface of blade (12) and the peripheral wall of the hollow space (4) define a first constriction (15) between them having a constant cross section whatever the position of blade (12) within the hollow space (4); and **in that** the peripheral region (5) of the bottom of hollow space (4) and the peripheral region (12b) of the bottom face of blade (12) that faces the bottom of hollow space (4) together define a second constriction (16) the cross section of which varies as a function of position of blade (12) within the hollow space (4).

6. Weighing device according to claim 5, **characterised in that** the top face of hollow space (4) is closed off by a lid (8) having a central passage (10) providing access to a connecting element (11) linking blade (12) to the free end (2a) of the deformable beam (2), and **in that** the periphery of the flexible membrane (14) is clamped between the lid (8) and the upper edge of the hollow space (4), the central region of this membrane (14) being clamped between blade (12) and the connecting element (11).
